# EUROPEAN PATENT APPLICATION

(11) **EP 4 596 621 A1**
(43) Date of publication of application: **06.08.2025**
(21) Application number: 23872210.2
(22) Date of filing: 22.09.2023
(51) Int. Cl.: C08L 27/06, B32B 5/18, B32B 27/30, B32B 27/40, C08K 5/10, C08K 5/3477

(54) **VINYL CHLORIDE RESIN COMPOSITION, VINYL CHLORIDE RESIN MOLDED ARTICLE, AND LAMINATE**

(30) Priority: 29.09.2022 JP 2022156976
(71) Applicant: Zeon Corporation, Tokyo 100-8246 (JP)
(72) Inventor: FUJIWARA, Takanori, Tokyo 100-8246 (JP)
(74) Representative: Maiwald GmbH
(86) International application number: PCT/JP2023/034595
(87) International publication number: WO 2024/070985

(57) **Abstract**

Provided is a vinyl chloride resin composition that is capable of forming a vinyl chloride resin molded product having suppressed gloss change. The vinyl chloride resin composition contains a vinyl chloride resin, a plasticizer, and a hindered amine light stabilizer having a molecular weight of not less than 550 and not more than 1,500. The content of the plasticizer is 75 parts by mass or more relative to 100 parts by mass of the vinyl chloride resin. The vinyl chloride resin composition is preferably used in powder molding.

## Description

### TECHNICAL FIELD

The present disclosure relates to a vinyl chloride resin composition, a vinyl chloride resin molded product, and a laminate.

### BACKGROUND

Vinyl chloride resins are used in a variety of applications due to generally having excellent characteristics in terms of cold resistance, heat resistance, oil resistance, and so forth.

Specifically, automobile interior materials such as a surface skin formed of a vinyl chloride resin molded product and a laminate obtained by lining a surface skin formed of a vinyl chloride resin molded product with a foamed product such as foamed polyurethane are used in the formation of automobile interior components such as automobile instrument panels and door trims, for example.

A vinyl chloride resin molded product that constitutes a surface skin of an automobile interior component such as an automobile instrument panel is produced, for example, by performing powder molding by a known molding method such as powder slush molding with respect to a vinyl chloride resin composition that contains a vinyl chloride resin, a plasticizer, and additives such as a stabilizer and a pigment (for example, refer to Patent Literature (PTL) 1).

As one specific example, a surface skin formed of a vinyl chloride resin molded product is produced in PTL 1 through powder slush molding of a vinyl chloride resin composition that contains a vinyl chloride resin, plasticizers such as a trimellitic acid ester and a specific polyester, and additives such as a stabilizer and a pigment.

### CITATION LIST

### Patent Literature

PTL 1: WO2020/090556A1

### SUMMARY

### (Technical Problem)

From a viewpoint of improving stability of external appearance of a vinyl chloride resin molded product, it is desirable to suppress changes to gloss of the surface of a vinyl chloride resin molded product (hereinafter, also referred to simply as "gloss change of a vinyl chloride resin molded product") caused by irradiation with light, for example.

However, the vinyl chloride resin composition of the conventional technique described above leaves room for improvement in terms of suppressing gloss change of a vinyl chloride resin molded product formed using the vinyl chloride resin composition.

Accordingly, one object of the present disclosure is to provide a vinyl chloride resin composition that is capable of forming a vinyl chloride resin molded product having suppressed gloss change.

Another object of the present disclosure is to provide a vinyl chloride resin molded product having suppressed gloss change.

Yet another object of the present disclosure is to provide a laminate including this vinyl chloride resin molded product.

### (Solution to Problem)

The inventor conducted diligent investigation with the aim of solving the problem set forth above. The inventor discovered that by using a vinyl chloride resin composition that contains a vinyl chloride resin, not less than a specific amount of a plasticizer, and a hindered amine light stabilizer having a molecular weight within a specific range, it is possible to suppress gloss change of a vinyl chloride resin molded product formed using the vinyl chloride resin composition. In this manner, the inventor completed the present disclosure.

Specifically, with the aim of advantageously solving the problem set forth above, [1] a presently disclosed vinyl chloride resin composition comprises: a vinyl chloride resin; a plasticizer; and a hindered amine light stabilizer having a molecular weight of not less than 550 and not more than 1,500, wherein content of the plasticizer is 75 parts by mass or more relative to 100 parts by mass of the vinyl chloride resin.

With a vinyl chloride resin composition that contains a vinyl chloride resin, not less than a specific amount of a plasticizer, and a hindered amine light stabilizer having a molecular weight within a specific range in this manner, it is possible to form a vinyl chloride resin molded product having suppressed gloss change.

[2] In the vinyl chloride resin composition according to the foregoing [1], content of the hindered amine light stabilizer is preferably not less than 0.01 parts by mass and not more than 20 parts by mass relative to 100 parts by mass of the vinyl chloride resin.

When the content of the hindered amine light stabilizer is within the specific range set forth above, gloss change of a formed vinyl chloride resin molded product can be further suppressed, and changes to color tone (hereinafter, also referred to simply as "color tone change") of the vinyl chloride resin molded product caused by irradiation with light, for example, and surface stickiness of the vinyl chloride resin molded product can also be suppressed. Moreover, when the content of the hindered amine light stabilizer is within the specific range set forth above, tensile elongation (particularly tensile elongation at low temperature) of a formed vinyl chloride resin molded product can be improved.

[3] In the vinyl chloride resin composition according to the foregoing [1] or [2], the hindered amine light stabilizer preferably includes a monovalent organic group represented by formula (I), shown below: 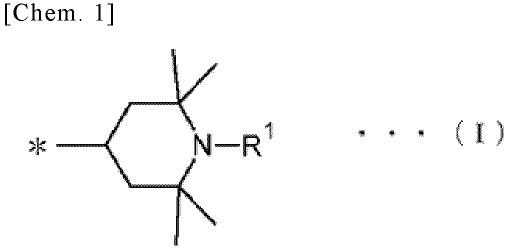 where, in formula (I), R¹ is a hydrogen atom or an alkyl group, and an asterisk (*) indicates atomic bonding.

When the hindered amine light stabilizer includes an organic group represented by formula (I), gloss change of a formed vinyl chloride resin molded product can be further suppressed.

[4] In the vinyl chloride resin composition according to the foregoing [3], R¹ is preferably a methyl group.

When R¹ in formula (I) is a methyl group, gloss change of a formed vinyl chloride resin molded product can be even further suppressed.

[5] In the vinyl chloride resin composition according to any one of the foregoing [1] to [4], the hindered amine light stabilizer preferably includes a monovalent organic group represented by formula (II), shown below: 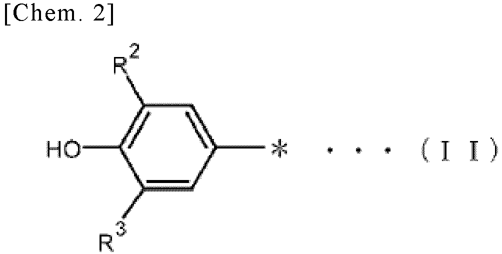 where, in formula (II), R² and R³ are each, independently of each other, a hydrogen atom or an alkyl group, and an asterisk (*) indicates atomic bonding.

When the hindered amine light stabilizer includes an organic group represented by formula (II), gloss change of a formed vinyl chloride resin molded product can be further suppressed.

**[6]** In the vinyl chloride resin composition according to the foregoing [5], R² and R³ are preferably each a tert-butyl group.

When R² and R³ in formula (II) are each a tert-butyl group, gloss change of a formed vinyl chloride resin molded product can be even further suppressed.

**[7]** In the vinyl chloride resin composition according to any one of the foregoing [1] to [6], the hindered amine light stabilizer preferably includes a compound represented by formula (III), shown below:

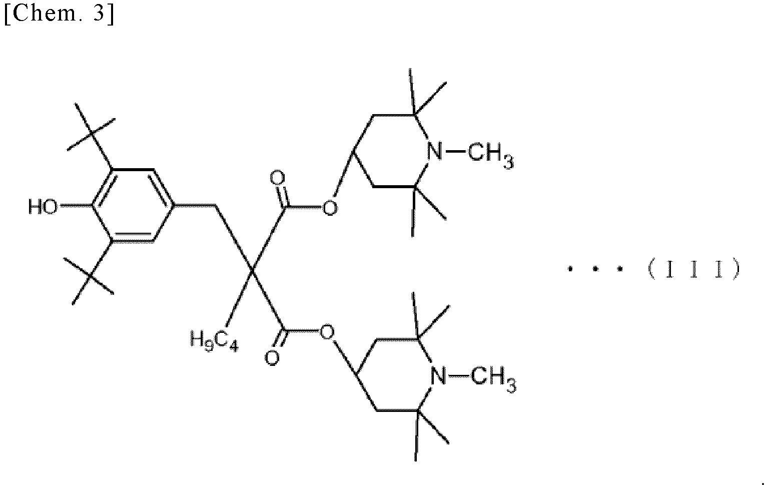

When the compound represented by formula (III) is used as the hindered amine light stabilizer, gloss change of a formed vinyl chloride resin molded product can be further suppressed.

[8] In the vinyl chloride resin composition according to any one of the foregoing [1] to [7], the plasticizer preferably includes either or both of a trimellitic acid ester and a polyester.

When either or both of a trimellitic acid ester and a polyester are used as the plasticizer, tensile characteristics (tensile elongation and tensile stress) of a formed vinyl chloride resin molded product can be improved.

[9] The vinyl chloride resin composition according to any one of the foregoing [1] to [8] preferably further comprises a cross-linked vinyl chloride resin.

When a cross-linked vinyl chloride resin is further used, powder fluidity of the vinyl chloride resin composition can be improved, and surface stickiness of a formed vinyl chloride resin molded product can also be suppressed. Moreover, when a cross-linked vinyl chloride resin is further used, gloss change of a formed vinyl chloride resin molded product can be further suppressed.

[10] The vinyl chloride resin composition according to any one of the foregoing [1] to [9] is preferably used in powder molding.

By using the vinyl chloride resin composition in powder molding, it is easy to obtain a vinyl chloride resin molded product that can be used well as an automobile interior material such as a surface skin for an automobile instrument panel, for example.

[11] The vinyl chloride resin composition according to any one of the foregoing [1] to [10] is preferably used in powder slush molding.

By using the vinyl chloride resin composition in powder slush molding, it is even easier to obtain a vinyl chloride resin molded product that can be used well as an automobile interior material such as a surface skin for an automobile instrument panel, for example.

Moreover, with the aim of advantageously solving the problem set forth above, [12] a presently disclosed vinyl chloride resin molded product is obtained through molding of the vinyl chloride resin composition according to any one of the foregoing [1] to [11].

A vinyl chloride resin molded product that is obtained through molding of the presently disclosed vinyl chloride resin composition set forth above in this manner has suppressed gloss change and excellent stability of external appearance.

[13] The vinyl chloride resin molded product according to the foregoing [12] is preferably for a surface skin of an automobile instrument panel.

The presently disclosed vinyl chloride resin molded product can suitably be used as a surface skin of an automobile instrument panel having suppressed gloss change and excellent stability of external appearance.

Furthermore, with the aim of advantageously solving the problem set forth above, [14] a presently disclosed laminate comprises: a foamed polyurethane molded product; and the vinyl chloride resin molded product according to the foregoing [12] or [13].

A laminate that includes a foamed polyurethane molded product and the presently disclosed vinyl chloride resin molded product set forth above has a vinyl chloride resin molded product part with suppressed gloss change and excellent stability of external appearance.

[15] The laminate according to the foregoing [14] is preferably for an automobile instrument panel.

By using the presently disclosed laminate as an automobile instrument panel in this manner, it is possible to suppress gloss change and improve stability of external appearance of a surface skin of the produced automobile instrument panel.

### (Advantageous Effect)

According to the present disclosure, it is possible to provide a vinyl chloride resin composition that is capable of forming a vinyl chloride resin molded product having suppressed gloss change.

Moreover, according to the present disclosure, it is possible to provide a vinyl chloride resin molded product having suppressed gloss change.

Furthermore, according to the present disclosure, it is possible to provide a laminate including this vinyl chloride resin molded product.

### DETAILED DESCRIPTION

The following provides a detailed description of embodiments of the present disclosure.

The presently disclosed vinyl chloride resin composition can be used, for example, in formation of the presently disclosed vinyl chloride resin molded product. Moreover, a vinyl chloride resin molded product formed using the presently disclosed vinyl chloride resin composition can suitably be used, for example, as an automobile interior material such as a surface skin included in an automobile interior component such as an automobile instrument panel or a door trim.

The presently disclosed vinyl chloride resin molded product can be used, for example, in formation of the presently disclosed laminate. Moreover, a laminate formed using the presently disclosed vinyl chloride resin molded product can suitably be used, for example, as an automobile interior material used in production of an automobile interior component such as an automobile instrument panel or a door trim.

### (Vinyl chloride resin composition)

A feature of the presently disclosed vinyl chloride resin composition is that it contains: (a) a vinyl chloride resin; (b) a plasticizer; and (c) a hindered amine light stabilizer having a molecular weight in a specific range (hereinafter, also referred to simply as the "(c) hindered amine light stabilizer").

Moreover, the presently disclosed vinyl chloride resin composition may further contain (d) a cross-linked vinyl chloride resin.

Furthermore, the presently disclosed vinyl chloride resin composition may optionally further contain additives other than the (a) vinyl chloride resin, (b) plasticizer, (c) hindered amine light stabilizer, and (d) cross-linked vinyl chloride resin.

With the presently disclosed vinyl chloride resin composition, it is possible to form a vinyl chloride resin molded product having suppressed gloss change.

Consequently, by using the presently disclosed vinyl chloride resin composition, it is possible to obtain a vinyl chloride resin molded product that is suitable as an automobile interior material such as a surface skin for an automobile instrument panel or a surface skin for a door trim, for example.

Note that from a viewpoint of easily obtaining a vinyl chloride resin molded product that can favorably be used as an automobile interior material using the presently disclosed vinyl chloride resin composition, for example, the presently disclosed vinyl chloride resin composition is preferably used in powder molding, and is more preferably used in powder slush molding.

### <(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 µm or more, whereas the term "resin fine particles" is used to refer to particles having a particle diameter of less than 30 µm.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

Note that the (a) vinyl chloride resin referred to in the present disclosure is taken to be a vinyl chloride resin that is not cross-linked. In other words, the (a) vinyl chloride resin is not inclusive of the subsequently described (d) cross-linked vinyl chloride resin.

### <<Vinyl chloride resin particles>>

In the vinyl chloride resin composition, the vinyl chloride resin particles normally function as a matrix resin (base material). The vinyl chloride resin particles are preferably produced by suspension polymerization.

### [Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. When the average degree of polymerization of the vinyl chloride resin forming the vinyl chloride resin particles is not less than any of the lower limits set forth above, physical strength of a vinyl chloride resin molded product formed using the vinyl chloride resin composition can be sufficiently ensured while also providing the vinyl chloride resin molded product with good tensile characteristics (particularly tensile elongation), for example. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. On the other hand, when the average degree of polymerization of the vinyl chloride resin forming the vinyl chloride resin particles is not more than any of the upper limits set forth above, meltability of the vinyl chloride resin composition can be improved.

The "average degree of polymerization" referred to in the present disclosure can be measured in accordance with JIS K6720-2.

### [Average particle diameter]

The average particle diameter of the vinyl chloride resin particles is normally 30 µm or more, preferably 50 µm or more, and more preferably 100 µm or more, and is preferably 500 µm or less, and more preferably 200 µm or less. When the average particle diameter of the vinyl chloride resin particles is not less than any of the lower limits set forth above, powder fluidity of the vinyl chloride resin composition can be improved. On the other hand, when the average particle diameter of the vinyl chloride resin particles is not more than any of the upper limits set forth above, meltability of the vinyl chloride resin composition can be improved, and surface smoothness of a formed vinyl chloride resin molded product can also be improved.

The "average particle diameter" referred to in the present disclosure can be measured as the volume-average particle diameter by laser diffraction in accordance with JIS Z8825.

### [Proportional content]

The proportional content of the vinyl chloride resin particles in the (a) vinyl chloride resin is preferably 80 mass% or more, and more preferably 90 mass% or more, can be set as 100 mass%, and is preferably 99 mass% or less. When the proportional content of the vinyl chloride resin particles in the (a) vinyl chloride resin is not less than any of the lower limits set forth above, physical strength of a formed vinyl chloride resin molded product can be sufficiently ensured while also improving tensile elongation of the vinyl chloride resin molded product. On the other hand, when the proportional content of the vinyl chloride resin particles in the (a) vinyl chloride resin is not more than the upper limit set forth above, powder fluidity of the vinyl chloride resin composition can be improved.

### <<Vinyl chloride resin fine particles>>

In the vinyl chloride resin composition, the vinyl chloride resin fine particles typically function as a dusting agent (powder fluidity modifier). The vinyl chloride resin fine particles are preferably produced by emulsion polymerization.

### [Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles that serve as a dusting agent is not less than any of the lower limits set forth above, powder fluidity of the vinyl chloride resin composition can be improved, and tensile elongation of a formed vinyl chloride resin molded product can also be improved. On the other hand, when the average degree of polymerization of the vinyl chloride resin forming the vinyl chloride resin fine particles is not more than any of the upper limits set forth above, meltability of the vinyl chloride resin composition can be increased, and surface smoothness of a formed vinyl chloride resin molded product can be improved.

### [Average particle diameter]

The average particle diameter of the vinyl chloride resin fine particles is normally less than 30 µm, preferably 10 µm or less, and more preferably 5 µm or less, and is preferably 0.1 µm or more, and more preferably 1 µm or more. When the average particle diameter of the vinyl chloride resin fine particles is not less than any of the lower limits set forth above, the vinyl chloride resin fine particles are not too small to function as a dusting agent, for example, and powder fluidity of the vinyl chloride resin composition can be improved. On the other hand, when the average particle diameter of the vinyl chloride resin fine particles is not more than any of the upper limits set forth above, meltability of the vinyl chloride resin composition can be increased, and surface smoothness of a formed vinyl chloride resin molded product can be improved.

### [Proportional content]

The proportional content of the vinyl chloride resin fine particles in the (a) vinyl chloride resin may be 0 mass%, but is preferably 1 mass% or more, and is preferably 20 mass% or less, and more preferably 10 mass% or less. When the proportional content of the vinyl chloride resin fine particles in the (a) vinyl chloride resin is not less than the lower limit set forth above, powder fluidity of the vinyl chloride resin composition can be improved. On the other hand, when the proportional content of the vinyl chloride resin fine particles in the (a) vinyl chloride resin is not more than any of the upper limits set forth above, physical strength of a formed vinyl chloride resin molded product can be increased.

### <(b) Plasticizer>

The (b) plasticizer is not specifically limited but preferably includes either or both of (b1) a trimellitic acid ester and (b2) a polyester. By using either or both of the (b1) trimellitic acid ester and the (b2) polyester as the (b) plasticizer that is used in the presently disclosed vinyl chloride resin composition, it is possible to form a vinyl chloride resin molded product having excellent tensile characteristics (tensile elongation and tensile stress). Moreover, in a situation in which a laminate is produced by lining a formed vinyl chloride resin molded product with a foamed polyurethane molded product, the use of the (b2) polyester plasticizer as the (b) plasticizer can suppress heat shrinkage of the vinyl chloride resin molded product caused by the plasticizer that is contained in the vinyl chloride resin molded product migrating to the foamed polyurethane molded product at high temperature. In other words, the use of the (b2) polyester as the (b) plasticizer can improve heat shrinkage resistance of a formed vinyl chloride resin molded product.

The (b) plasticizer may include both the (b1) trimellitic acid ester and the (b2) polyester, or may include one of the (b1) trimellitic acid ester and the (b2) polyester and not include the other thereof.

Note that the (b) plasticizer may include plasticizers other than the (b1) trimellitic acid ester and the (b2) polyester (hereinafter, also referred to as "(b3) other plasticizers").

The content of the (b) plasticizer (i.e., the total content of the (b1) trimellitic acid ester, (b2) polyester, and (b3) other plasticizers) in the vinyl chloride resin composition is required to be 75 parts by mass or more relative to 100 parts by mass of the vinyl chloride resin, is preferably 80 parts by mass or more, more preferably 85 parts by mass or more, even more preferably 90 parts by mass or more, further preferably 100 parts by mass or more, and even further preferably 110 parts by mass or more relative to 100 parts by mass of the vinyl chloride resin, and is preferably 200 parts by mass or less, more preferably 180 parts by mass or less, even more preferably 160 parts by mass or less, further preferably 140 parts by mass or less, and even further preferably 125 parts by mass or less relative to 100 parts by mass of the vinyl chloride resin. When the content of the (b) plasticizer in the vinyl chloride resin composition is not less than any of the lower limits set forth above, the vinyl chloride resin composition can be molded (particularly powder molded) well, and sufficient flexibility can be imparted to a formed vinyl chloride resin molded product. On the other hand, when the content of the (b) plasticizer in the vinyl chloride resin composition is not more than any of the upper limits set forth above, gloss change of a formed vinyl chloride resin molded product can be further suppressed, and color tone change and surface stickiness of the vinyl chloride resin molded product can also be suppressed.

The proportional content of the (b) plasticizer in the vinyl chloride resin composition can be adjusted as appropriate to the extent that the desired effects according to the present disclosure are obtained and can, for example, be set as not less than 35 mass% and not more than 65 mass%.

Note that the "proportional content of a plasticizer" in a vinyl chloride resin composition referred to in present disclosure can be measured by a Soxhlet extraction method with the vinyl chloride resin composition or a vinyl chloride resin molded product formed using the vinyl chloride resin composition as a measurement sample.

### <<(b1) Trimellitic acid ester>>

The (b1) trimellitic acid ester included in the (b) plasticizer is preferably an ester compound of trimellitic acid and a monohydric alcohol.

Specific examples of the monohydric alcohol include, but are not specifically limited to, aliphatic alcohols such as 1-hexanol, 1-heptanol, 1-octanol, 2-ethylhexanol, 1-nonanol, 1-decanol, 1-undecanol, and 1-dodecanol. Of these examples, an aliphatic alcohol having a carbon number of 6 to 18 is preferable, and a linear aliphatic alcohol having a carbon number of 6 to 18 is more preferable as the monohydric alcohol.

In particular, the (b1) trimellitic acid ester is preferably a triester compound in which substantially all the carboxy groups of trimellitic acid are esterified with the monohydric alcohol described above. Alcohol residue portions of the triester compound may all be derived from the same alcohol or may each be derived from a different alcohol.

The (b1) trimellitic acid ester may be composed of a single compound or may be a mixture of different compounds.

Specific examples of suitable (b1) trimellitic acid esters include tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, trimellitic acid trialkyl esters (esters including two or more types of alkyl groups having different carbon numbers (with a proviso that the carbon number is 6 to 18) in a molecule), trimellitic acid tri-n-alkyl esters (esters including two or more types of alkyl groups having different carbon numbers (with a proviso that the carbon number is 6 to 18) in a molecule), and mixtures thereof.

Specific examples of more preferable (b1) trimellitic acid esters include tri-n-octyl trimellitate, tri(2-ethylhexyl) trimellitate, tri-n-nonyl trimellitate, tri-n-decyl trimellitate, trimellitic acid tri-n-alkyl esters (esters including two or more types of alkyl groups having different carbon numbers (with a proviso that the carbon number is 6 to 18) in a molecule), and mixtures thereof.

The proportional content of the (b1) trimellitic acid ester in the (b) plasticizer is preferably 90 mass% or more, more preferably 92 mass% or more, and even more preferably 93 mass% or more, can be set as 100 mass% or less, and is preferably 99 mass% or less, and more preferably 98 mass% or less. When the proportional content of the (b1) trimellitic acid ester in the (b) plasticizer is within any of the specific ranges set forth above, powder fluidity of the vinyl chloride resin composition can be improved, and tensile elongation of a formed vinyl chloride resin molded product can also be improved.

The content of the (b1) trimellitic acid ester in the vinyl chloride resin composition is preferably 70 parts by mass or more, more preferably 75 parts by mass or more, even more preferably 80 parts by mass or more, further preferably 85 parts by mass or more, even further preferably 95 parts by mass or more, and yet further preferably 105 parts by mass or more relative to 100 parts by mass of the (a) vinyl chloride resin, and is preferably 195 parts by mass or less, more preferably 175 parts by mass or less, even more preferably 155 parts by mass or less, further preferably 135 parts by mass or less, and even further preferably 120 parts by mass or less relative to 100 parts by mass of the (a) vinyl chloride resin. When the proportional content of the (b1) trimellitic acid ester in the vinyl chloride resin composition is not less than any of the lower limits set forth above, powder fluidity of the vinyl chloride resin composition can be improved, and tensile elongation of a formed vinyl chloride resin molded product can also be improved. On the other hand, when the content of the (b1) trimellitic acid ester in the vinyl chloride resin composition is not more than any of the upper limits set forth above, gloss change of a formed vinyl chloride resin molded product can be further suppressed, and color tone change and surface stickiness of the vinyl chloride resin molded product can also be suppressed.

### <<(b2) Polyester>>

Polyesters such as a polyester including a structural unit derived from adipic acid (adipic acid polyester), a polyester including a structural unit derived from sebacic acid (sebacic acid polyester), and a polyester including a structural unit derived from phthalic acid (phthalic acid polyester) can be used without any specific limitations as the (b2) polyester plasticizer included in the (b) plasticizer. Note that one of these polyesters may be used individually, or two or more of these polyesters may be used as a mixture in a freely selected ratio.

In particular, it is preferable to use an adipic acid polyester (polyester including a structural unit derived from adipic acid) as the (b2) polyester from a viewpoint of further increasing heat shrinkage resistance of a vinyl chloride resin molded product.

The viscosity of the (b2) polyester is preferably 500 mPa·s or more, and more preferably 1,000 mPa·s or more, and is preferably 8,000 mPa·s or less, more preferably 5,000 mPa·s or less, and even more preferably 4,000 mPa·s or less.

Note that the "viscosity" can be measured in accordance with JIS Z8803 at a temperature of 23°C.

The proportional content of the (b2) polyester in the (b) plasticizer is preferably 90 mass% or more, more preferably 92 mass% or more, and even more preferably 93 mass% or more, can be set as 100 mass% or less, and is preferably 99 mass% or less, and more preferably 98 mass% or less. When the proportional content of the (b2) polyester in the (b) plasticizer is within any of the specific ranges set forth above, powder fluidity of the vinyl chloride resin composition can be improved, and tensile elongation of a formed vinyl chloride resin molded product can also be improved.

The content of the (b2) polyester in the vinyl chloride resin composition is preferably 70 parts by mass or more, more preferably 75 parts by mass or more, even more preferably 80 parts by mass or more, further preferably 85 parts by mass or more, even further preferably 95 parts by mass or more, and yet further preferably 105 parts by mass or more relative to 100 parts by mass of the (a) vinyl chloride resin, and is preferably 195 parts by mass or less, more preferably 175 parts by mass or less, even more preferably 155 parts by mass or less, further preferably 135 parts by mass or less, and even further preferably 120 parts by mass or less relative to 100 parts by mass of the (a) vinyl chloride resin. When the proportional content of the (b2) polyester in the vinyl chloride resin composition is not less than any of the lower limits set forth above, powder fluidity of the vinyl chloride resin composition can be improved, and tensile elongation of a formed vinyl chloride resin molded product can also be improved. On the other hand, when the content of the (b2) polyester in the vinyl chloride resin composition is not more than any of the upper limits set forth above, gloss change of a formed vinyl chloride resin molded product can be further suppressed, and color tone change and surface stickiness of the vinyl chloride resin molded product can also be suppressed.

### <<(b3) Other plasticizers>>

The (b) plasticizer that is contained in the vinyl chloride resin composition may optionally include plasticizers other than the (b1) trimellitic acid ester and (b2) polyester described above (also referred to as "(b3) other plasticizers").

Specific examples of (b3) other plasticizers include primary plasticizers, secondary plasticizers, and so forth other than the above-described (b1) trimellitic acid ester and (b2) polyester among plasticizers that are described in WO2016/098344A1.

Specifically, examples of so-called primary plasticizers include:
pyromellitic acid ester plasticizers such as tetra-n-hexyl pyromellitate, tetra-n-heptyl pyromellitate, tetra-n-octyl pyromellitate, tetra(2-ethylhexyl) pyromellitate, tetra-n-nonyl pyromellitate, tetra-n-decyl pyromellitate, tetraisodecyl pyromellitate, tetra-n-undecyl pyromellitate, tetra-n-dodecyl pyromellitate, and pyromellitic acid tetra-n-alkyl esters (esters including two or more types of alkyl groups having different carbon numbers (with a proviso that the carbon number is 6 to 12) in a molecule);
phthalic acid derivatives such as dimethyl phthalate, diethyl phthalate, dibutyl phthalate, di(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, butyl benzyl phthalate, dinonyl phthalate, and dicyclohexyl phthalate;
isophthalic acid derivatives such as dimethyl isophthalate, di(2-ethylhexyl) isophthalate, and diisooctyl isophthalate;
tetrahydrophthalic acid derivatives such as di(2-ethylhexyl) tetrahydrophthalate, di-n-octyl tetrahydrophthalate, and diisodecyl tetrahydrophthalate;
adipic acid derivatives such as di-n-butyl adipate, di(2-ethylhexyl) adipate, diisodecyl adipate, and diisononyl adipate;
azelaic acid derivatives such as di(2-ethylhexyl) azelate, diisooctyl azelate, and di-n-hexyl azelate;
sebacic acid derivatives such as di-n-butyl sebacate, di(2-ethylhexyl) sebacate, diisodecyl sebacate, and di(2-butyloctyl) sebacate;
maleic acid derivatives such as di-n-butyl maleate, dimethyl maleate, diethyl maleate, and di(2-ethylhexyl) maleate;
fumaric acid derivatives such as di-n-butyl fumarate and di(2-ethylhexyl) fumarate;
citric acid derivatives such as triethyl citrate, tri-n-butyl citrate, acetyl triethyl citrate, and acetyl tri(2-ethylhexyl) citrate;
itaconic acid derivatives such as monomethyl itaconate, monobutyl itaconate, dimethyl itaconate, diethyl itaconate, dibutyl itaconate, and di(2-ethylhexyl) itaconate;
oleic acid derivatives such as butyl oleate, glyceryl monooleate, and diethylene glycol monooleate;
ricinoleic acid derivatives such as methyl acetyl ricinoleate, butyl acetyl ricinoleate, glyceryl monoricinoleate, and diethylene glycol monoricinoleate;
stearic acid derivatives such as n-butyl stearate and diethylene glycol distearate;
other fatty acid derivatives such as diethylene glycol monolaurate, diethylene glycol dipelargonate, and pentaerythritol fatty acid esters;
phosphoric acid derivatives such as triethyl phosphate, tributyl phosphate, tri(2-ethylhexyl) phosphate, tributoxyethyl phosphate, triphenyl phosphate, cresyl diphenyl phosphate, tricresyl phosphate, trixylenyl phosphate, and tris(chloroethyl) phosphate;
glycol derivatives such as diethylene glycol dibenzoate, dipropylene glycol dibenzoate, triethylene glycol dibenzoate, triethylene glycol di(2-ethylbutyrate), triethylene glycol di(2-ethylhexanoate), and dibutyl methylenebis(thioglycolate);
glycerin derivatives such as glycerol monoacetate, glycerol triacetate, and glycerol tributyrate; and
epoxy derivatives such as diisodecyl epoxyhexahydrophthalate, epoxy triglyceride, epoxidized octyl oleate, and epoxidized decyl oleate.

Examples of so-called secondary plasticizers include epoxidized vegetable oils such as epoxidized soybean oil and epoxidized linseed oil; chlorinated paraffin; fatty acid esters of glycols such as triethylene glycol dicaprylate; butyl epoxy stearate; phenyl oleate; and methyl dihydroabietate.

In particular, from a viewpoint of further enhancing tensile characteristics (tensile elongation and tensile stress) of a formed vinyl chloride resin molded product, it is preferable to used epoxidized vegetable oil, and more preferable to use epoxidized soybean oil.

The proportional content of the (b3) other plasticizers in the (b) plasticizer is not specifically limited but can be set as 0 mass% or more, can be set as 1 mass% or more, or can be set as 3 mass% or more, for example, and can be set as 10 mass% or less, can be set as 8 mass% or less, or can be set as 7 mass% or less, for example.

The content of the (b3) other plasticizers in the vinyl chloride resin composition is not specifically limited but can be set as not less than 0 parts by mass and not more than 15 parts by mass relative to 100 parts by mass of the (a) vinyl chloride resin.

In a case in which epoxidized vegetable oil such as epoxidized soybean oil is used as (b3) another plasticizer, from a viewpoint of even further improving tensile characteristics (tensile elongation and tensile stress) of a formed vinyl chloride resin molded product, the content of the epoxidized vegetable oil as (b3) another plasticizer is preferably 2 parts by mass or more, more preferably 3 parts by mass or more, and even more preferably 4 parts by mass or more relative to 100 parts by mass of the (a) vinyl chloride resin, and is preferably 10 parts by mass or less, and more preferably 7 parts by mass or less relative to 100 parts by mass of the (a) vinyl chloride resin.

### <(c) Hindered amine light stabilizer>

The (c) hindered amine light stabilizer is a component that can suppress gloss change of a vinyl chloride resin molded product that is formed using the vinyl chloride resin composition.

### <<Molecular weight>>

The molecular weight of the (c) hindered amine light stabilizer is required to be 550 or more, and is preferably 575 or more, more preferably 600 or more, even more preferably 625 or more, further preferably 650 or more, and even further preferably 675 or more. Moreover, the molecular weight of the (c) hindered amine light stabilizer is required to be 1,500 or less, and is preferably 1,200 or less, more preferably 1,000 or less, even more preferably 900 or less, further preferably 800 or less, and even further preferably 700 or less.

When the molecular weight of the (c) hindered amine light stabilizer is not less than any of the lower limits set forth above, gloss change of a formed vinyl chloride resin molded product can be sufficiently suppressed. Moreover, when the molecular weight of the (c) hindered amine light stabilizer is not less than any of the lower limits set forth above, surface stickiness of a formed vinyl chloride resin molded product can be suppressed, and tensile elongation (particularly tensile elongation at low temperature) of the vinyl chloride resin molded product can also be improved. On the other hand, when the molecular weight of the (c) hindered amine light stabilizer is not more than any of the upper limits set forth above, gloss change of a formed vinyl chloride resin molded product can be sufficiently suppressed. Moreover, when the molecular weight of the (c) hindered amine light stabilizer is not more than any of the upper limits set forth above, sufficiently high tensile elongation (particularly tensile elongation at low temperature) of a formed vinyl chloride resin molded product can be ensured.

It should be noted that the presently disclosed vinyl chloride resin composition may further contain a hindered amine light stabilizer having a molecular weight outside of the specific range set forth above (for example, a molecular weight of less than 550 or a molecular weight of more than 1,500) in addition to the (c) hindered amine light stabilizer that has a molecular weight within the specific range set forth above. However, from a viewpoint of further suppressing gloss change of a formed vinyl chloride resin molded product, it is preferable that the presently disclosed vinyl chloride resin composition does not contain a hindered amine light stabilizer having a molecular weight outside of the specific range set forth above.

### <<Structure>>

The (c) hindered amine light stabilizer preferably includes a monovalent organic group represented by formula (I), shown below. 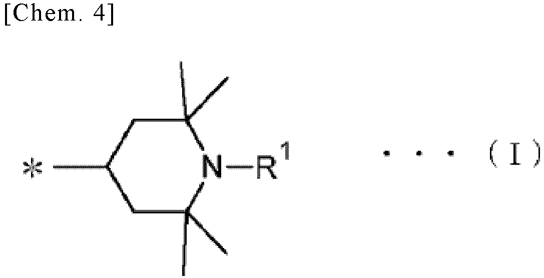 [In formula (I), R¹ is a hydrogen atom or an alkyl group, and an asterisk (*) indicates atomic bonding.] When the (c) hindered amine light stabilizer includes a monovalent organic group represented by formula (I), gloss change of a formed vinyl chloride resin molded product can be further suppressed.

From a viewpoint of even further suppressing gloss change of a formed vinyl chloride resin molded product, R¹ in formula (I) is preferably an alkyl group, more preferably an alkyl group having a carbon number of not less than 1 and not more than 10, even more preferably an alkyl group having a carbon number of not less than 1 and not more than 5, further preferably an alkyl group having a carbon number of not less than 1 and not more than 3, and particularly preferably a methyl group. In other words, it is particularly preferable that the (c) hindered amine light stabilizer is an N-methylated hindered amine light stabilizer.

Moreover, from a viewpoint of even further suppressing gloss change of a formed vinyl chloride resin molded product, the number of monovalent organic groups represented by formula (I) per one molecule of the (c) hindered amine light stabilizer is preferably 1 or more, and more preferably 2 or more, is preferably 4 or less, and more preferably 3 or less, and is particularly preferably 2.

Furthermore, the (c) hindered amine light stabilizer preferably includes a monovalent organic group represented by formula (II), shown below. 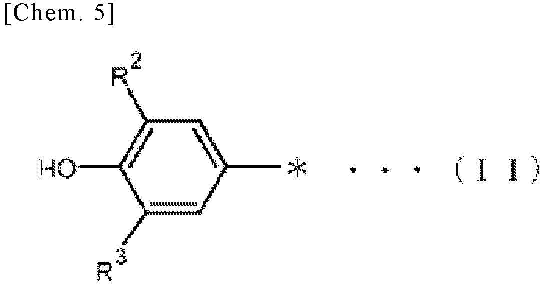 [In formula (II), R² and R³ are each, independently of each other, a hydrogen atom or an alkyl group, and an asterisk (*) indicates atomic bonding.] When the (c) hindered amine light stabilizer includes a monovalent organic group represented by formula (II), gloss change of a formed vinyl chloride resin molded product can be further suppressed.

From a viewpoint of even further suppressing gloss change of a formed vinyl chloride resin molded product, it is preferable that at least one of R² and R³ in formula (II) is an alkyl group, and more preferable that R² and R³ in formula (II) are each an alkyl group.

The carbon number of the alkyl group that can constitute R² and R³ in formula (II) is preferably 1 or more, more preferably 2 or more, even more preferably 3 or more, and further preferably 4 or more, is preferably 10 or less, more preferably 8 or less, even more preferably 6 or less, and further preferably 5 or less, and is particularly preferably 4. When the carbon number of the alkyl group that can constitute R² and R³ is within any of the specific ranges set forth above, gloss change of a formed vinyl chloride resin molded product can be yet further suppressed.

Moreover, from a viewpoint of yet further suppressing gloss change of a formed vinyl chloride resin molded product, it is particularly preferable that R² and R³ in formula (II) are each a tert-butyl group (also referred to as a "1,1-dimethylethyl group").

Also, from a viewpoint of even further suppressing gloss change of a formed vinyl chloride resin molded product, the number of monovalent organic groups represented by formula (II) per one molecule of the (c) hindered amine light stabilizer is preferably 1 or more, is preferably 3 or less, and more preferably 2 or less, and is particularly preferably 1.

The (c) hindered amine light stabilizer is particularly preferably a compound represented by formula (III), shown below. 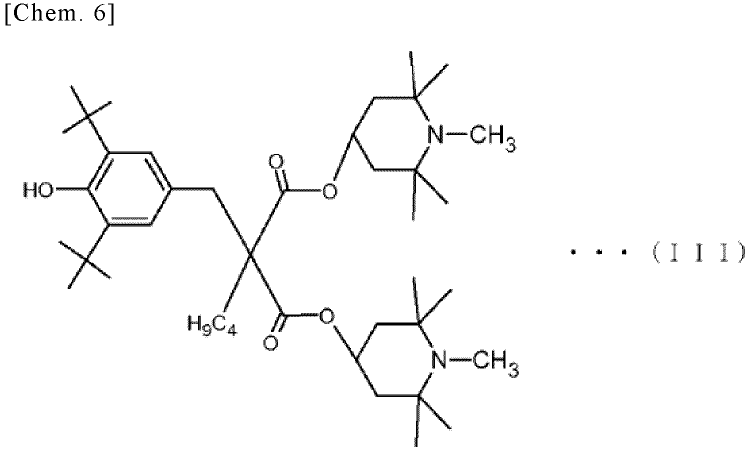 In other words, the (c) hindered amine light stabilizer is particularly preferably bis(1,2,2,6,6-pentamethyl-4-piperidyl) butyl(3,5-di-tert-butyl-4-hydroxybenzyl)malonate (also referred to as "bis[1,2,2,6,6-pentamethyl-4-piperidinyl] 2-[[3,5-bis(1,1-dimethylethyl)-4-hydroxyphenyl]methyl]-2-butylpropanedioate").

A commercially available product can be used as the (c) hindered amine light stabilizer. For example, Tinuvin 144 (compound name: bis(1,2,2,6,6-pentamethyl-4-piperidyl) butyl(3,5-di-tert-butyl-4-hydroxybenzyl)malonate) produced by BASF Japan Ltd. can be used as the (c) hindered amine light stabilizer.

Note that one hindered amine light stabilizer may be used individually, or two or more hindered amine light stabilizers may be used in combination as the (c) hindered amine light stabilizer without any specific limitations so long as they are hindered amine light stabilizers having a molecular weight within the specific range set forth above.

### <<Content>>

The content of the (c) hindered amine light stabilizer in the vinyl chloride resin composition is not specifically limited but is preferably 0.01 parts by mass or more, more preferably 0.05 parts by mass or more, even more preferably 0.1 parts by mass or more, further preferably 0.15 parts by mass or more, even further preferably 0.2 parts by mass or more, and particularly preferably 0.25 parts by mass or more relative to 100 parts by mass of the (a) vinyl chloride resin, and is preferably 20 parts by mass or less, more preferably 5 parts by mass or less, even more preferably 3 parts by mass or less, further preferably 1.5 parts by mass or less, even further preferably 1 part by mass or less, yet further preferably 0.8 parts by mass or less, and particularly preferably 0.5 parts by mass or less relative to 100 parts by mass of the (a) vinyl chloride resin.

When the content of the (c) hindered amine light stabilizer in the vinyl chloride resin composition is not less than any of the lower limits set forth above, gloss change of a formed vinyl chloride resin molded product can be further suppressed. Moreover, when the content of the (c) hindered amine light stabilizer in the vinyl chloride resin composition is not less than any of the lower limits set forth above, color tone change of a formed vinyl chloride resin molded product can be suppressed, and tensile elongation (particularly tensile elongation at low temperature) of the vinyl chloride resin molded product can also be improved. On the other hand, when the content of the (c) hindered amine light stabilizer in the vinyl chloride resin composition is not more than any of the upper limits set forth above, gloss change of a formed vinyl chloride resin molded product can be further suppressed. Moreover, when the content of the (c) hindered amine light stabilizer in the vinyl chloride resin composition is not more than any of the upper limits set forth above, surface stickiness of a formed vinyl chloride resin molded product can be suppressed, and sufficiently high tensile elongation (particularly tensile elongation at low temperature) of the vinyl chloride resin molded product can also be ensured.

The content of the (c) hindered amine light stabilizer in the vinyl chloride resin composition is not specifically limited but is preferably 0.01 parts by mass or more, more preferably 0.05 parts by mass or more, even more preferably 0.1 parts by mass or more, further preferably 0.15 parts by mass or more, even further preferably 0.2 parts by mass or more, and particularly preferably 0.22 parts by mass or more relative to 100 parts by mass of the (b) plasticizer, and is preferably 20 parts by mass or less, more preferably 5 parts by mass or less, even more preferably 3 parts by mass or less, further preferably 1.5 parts by mass or less, even further preferably 1 part by mass or less, yet further preferably 0.8 parts by mass or less, and particularly preferably 0.45 parts by mass or less relative to 100 parts by mass of the (b) plasticizer.

When the content of the (c) hindered amine light stabilizer in the vinyl chloride resin composition is not less than any of the lower limits set forth above, gloss change of a formed vinyl chloride resin molded product can be further suppressed. Moreover, when the content of the (c) hindered amine light stabilizer in the vinyl chloride resin composition is not less than any of the lower limits set forth above, color tone change of a formed vinyl chloride resin molded product can be suppressed, and tensile elongation (particularly tensile elongation at low temperature) of the vinyl chloride resin molded product can also be improved. On the other hand, when the content of the (c) hindered amine light stabilizer in the vinyl chloride resin composition is not more than any of the upper limits set forth above, gloss change of a formed vinyl chloride resin molded product can be further suppressed. Moreover, when the content of the (c) hindered amine light stabilizer in the vinyl chloride resin composition is not more than any of the upper limits set forth above, surface stickiness of a formed vinyl chloride resin molded product can be suppressed, and sufficiently high tensile elongation (particularly tensile elongation at low temperature) of the vinyl chloride resin molded product can also be ensured.

### <(d) Cross-linked vinyl chloride resin>

The presently disclosed vinyl chloride resin composition preferably further contains (d) a cross-linked vinyl chloride resin in addition to the (a) vinyl chloride resin, (b) plasticizer, and (c) hindered amine light stabilizer described above. The (d) cross-linked vinyl chloride resin can function as a dusting agent (powder fluidity modifier) in the vinyl chloride resin composition. When the vinyl chloride resin composition further contains the (d) cross-linked vinyl chloride resin, powder fluidity of the vinyl chloride resin composition can be improved. Moreover, when the vinyl chloride resin composition further contains the (d) cross-linked vinyl chloride resin, surface stickiness of a formed vinyl chloride resin molded product can be further suppressed.

Also, by using the previously described (c) hindered amine light stabilizer and the (d) cross-linked vinyl chloride resin together in the presently disclosed vinyl chloride resin composition, it is possible to further suppress gloss change of a formed vinyl chloride resin molded product.

The (d) cross-linked vinyl chloride resin is a resin resulting from cross-linking of a vinyl chloride resin. Moreover, the (d) cross-linked vinyl chloride resin can be produced through cross-linking of a non-cross-linked vinyl chloride resin. The non-cross-linked vinyl chloride resin that can serve as a material in production of the (d) cross-linked vinyl chloride resin may, for example, be a homopolymer composed of vinyl chloride monomer units or a vinyl chloride copolymer such as previously described as a specific example of the (a) vinyl chloride resin. No specific limitations are placed on the method by which the vinyl chloride resin is cross-linked. For example, a method that involves chemical cross-linking using a known cross-linker or a method that involves cross-linking through irradiation with radiation such as an electron beam may be adopted.

A particulate cross-linked vinyl chloride resin is normally used as the (d) cross-linked vinyl chloride resin. Moreover, from a viewpoint of even further improving powder fluidity of the vinyl chloride resin composition, the (d) cross-linked vinyl chloride resin preferably includes cross-linked vinyl chloride resin fine particles, and is more preferably composed of only cross-linked vinyl chloride resin fine particles. Note that the (d) cross-linked vinyl chloride resin can include one type of cross-linked vinyl chloride resin fine particles or can include two or more types of cross-linked vinyl chloride resin fine particles.

The average particle diameter of the cross-linked vinyl chloride resin fine particles is normally less than 30 µm, preferably 10 µm or less, and more preferably 5 µm or less, and is preferably 0.1 µm or more, and more preferably 1 µm or more. When the average particle diameter of the cross-linked vinyl chloride resin fine particles is not less than any of the lower limits set forth above, the cross-linked vinyl chloride resin fine particles are not too small to function as a dusting agent, for example, and powder fluidity (particularly high-temperature powder fluidity) of the vinyl chloride resin composition can be further improved. Moreover, when the average particle diameter of the cross-linked vinyl chloride resin fine particles is not more than any of the upper limits set forth above, meltability of the vinyl chloride resin composition can be increased, and surface smoothness of a formed vinyl chloride resin molded product can be improved.

The content of the (d) cross-linked vinyl chloride resin in the vinyl chloride resin composition is preferably 0.1 parts by mass or more, more preferably 1 part by mass or more, even more preferably 4 parts by mass or more, further preferably 6 parts by mass or more, and even further preferably 7 parts by mass or more relative to 100 parts by mass of the (a) vinyl chloride resin, and is preferably 30 parts by mass or less, more preferably 25 parts by mass or less, even more preferably 20 parts by mass or less, further preferably 15 parts by mass or less, and even further preferably 10 parts by mass or less relative to 100 parts by mass of the (a) vinyl chloride resin. When the content of the (d) cross-linked vinyl chloride resin in the vinyl chloride resin composition is not less than any of the lower limits set forth above, gloss change of a formed vinyl chloride resin molded product can be even further suppressed. Moreover, when the content of the (d) cross-linked vinyl chloride resin in the vinyl chloride resin composition is not less than any of the lower limits set forth above, powder fluidity of the vinyl chloride resin composition can be further improved, and surface stickiness of a formed vinyl chloride resin molded product can also be further suppressed. On the other hand, when the content of the (d) cross-linked vinyl chloride resin in the vinyl chloride resin composition is not more than any of the upper limits set forth above, sufficiently high tensile elongation of a formed vinyl chloride resin molded product can be ensured.

A mass ratio of the (d) cross-linked vinyl chloride resin and the previously described vinyl chloride resin fine particles (cross-linked vinyl chloride resin/vinyl chloride resin fine particles) in the vinyl chloride resin composition is preferably 1/2 or more, more preferably 2/3 or more, and even more preferably 1/1 or more, and is preferably 20/1 or less, more preferably 15/1 or less, and even more preferably 10/1 or less. When the mass ratio of the (d) cross-linked vinyl chloride resin and the vinyl chloride resin fine particles (cross-linked vinyl chloride resin/vinyl chloride resin fine particles) in the vinyl chloride resin composition is not less than any of the lower limits set forth above, powder fluidity of the vinyl chloride resin composition can be further improved, and surface stickiness of a formed vinyl chloride resin molded product can also be further suppressed. On the other hand, when the mass ratio of the (d) cross-linked vinyl chloride resin and the vinyl chloride resin fine particles (cross-linked vinyl chloride resin/vinyl chloride resin fine particles) in the vinyl chloride resin composition is not more than any of the upper limits set forth above, sufficiently high tensile elongation of a formed vinyl chloride resin molded product can be ensured.

The content of the (d) cross-linked vinyl chloride resin in the vinyl chloride resin composition is preferably 0.1 parts by mass or more, more preferably 1 part by mass or more, even more preferably 4 parts by mass or more, further preferably 5 parts by mass or more, and even further preferably 6 parts by mass or more relative to 100 parts by mass of the (b) plasticizer, and is preferably 30 parts by mass or less, more preferably 25 parts by mass or less, even more preferably 18 parts by mass or less, further preferably 13 parts by mass or less, and even further preferably 10 parts by mass or less relative to 100 parts by mass of the (b) plasticizer. When the content of the (d) cross-linked vinyl chloride resin in the vinyl chloride resin composition is not less than any of the lower limits set forth above, gloss change of a formed vinyl chloride resin molded product can be even further suppressed. Moreover, when the content of the (d) cross-linked vinyl chloride resin in the vinyl chloride resin composition is not less than any of the lower limits set forth above, powder fluidity of the vinyl chloride resin composition can be further improved, and surface stickiness of a formed vinyl chloride resin molded product can also be further suppressed. On the other hand, when the content of the (d) cross-linked vinyl chloride resin in the vinyl chloride resin composition is not more than any of the upper limits set forth above, sufficiently high tensile elongation of a formed vinyl chloride resin molded product can be ensured.

### <Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, β-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts of these additives can also be the same as described in WO2016/098344A1.

### <<Amide compound>>

The presently disclosed vinyl chloride resin composition for powder molding may contain an amide compound as an additive other than those described above. The further inclusion of an amide compound in the vinyl chloride resin composition can improve demolding ability of a formed vinyl chloride resin molded product.

The amide compound is a compound that includes an amide group and may, for example, be indicated by the following formula (1).

R ⁴(NR⁵COR⁶)ₙ (1)

[In formula (1), n is an integer of not less than 2 and not more than 6, R⁴ is an n-valent hydrocarbon group, R⁵ is a monovalent hydrocarbon group or hydrogen, R⁶ is a monovalent hydrocarbon group, the n-number of R⁵ may be the same as or different from one another, and the n-number of R⁶ may be the same as or different from one another.] In other words, the amide compound may, for example, have a structure resulting from the n-number of hydrogens of a hydrocarbon each being replaced by an amide group indicated by -NR⁵COR⁶.

In formula (1), n is an integer of not less than 2 and not more than 6, and may be an integer of not less than 2 and not more than 3, or may be 2, for example.

R⁴ in formula (1) is an n-valent hydrocarbon group and may be an n-valent aliphatic hydrocarbon group or may be an n-valent aromatic hydrocarbon group.

The number of carbons in R⁴ may be 1 or more, may be 2 or more, may be 8 or less, or may be 6 or less, for example.

R⁴ may, for example, be a methylene group, a methylmethylene group, an ethylene group (dimethylene group), a dimethylmethylene group, an isopropylene group, a trimethylene group, an isobutylene group, a tetramethylene group, a hexamethylene group, or the like.

R⁵ in formula (1) is a monovalent hydrocarbon group or hydrogen, and the n-number of R⁵ may be the same as or different from one another. The monovalent hydrocarbon group of R⁵ may be a monovalent aliphatic hydrocarbon group or may be a monovalent aromatic hydrocarbon group. The monovalent aliphatic hydrocarbon group may, for example, be a monovalent chain-type aliphatic hydrocarbon group. Moreover, the monovalent aliphatic hydrocarbon group may be a saturated aliphatic hydrocarbon group or may be an unsaturated aliphatic hydrocarbon group.

Furthermore, the number of carbons in the hydrocarbon group of R⁵ may be not less than 1 and not more than 2, for example.

R⁵ may, for example, be hydrogen, a methyl group, or an ethyl group.

At least one of the n-number of R⁵ may be hydrogen, or all of the n-number of R⁵ may be hydrogen.

R⁶ in formula (1) is a monovalent hydrocarbon group, and the n-number of R⁶ may be the same as or different from one another. In other words, a saturated hydrocarbon group of R⁶ and an unsaturated hydrocarbon group of R⁶ may be present together in a single molecule of the (e) amide compound, just an unsaturated hydrocarbon group of R⁶ may be present in a single molecule of the (e) amide compound, or just a saturated hydrocarbon group of R⁶ may be present in a single molecule of the (e) amide compound.

The saturated hydrocarbon group of R⁶ may be a monovalent chain-type saturated aliphatic hydrocarbon group, for example.

Moreover, the number of carbons in the saturated hydrocarbon group of R⁶ may be 11 or more, may be 13 or more, may be 15 or more, may be 23 or less, may be 21 or less, may be 19 or less, or may be 17.

The saturated hydrocarbon group of R⁶ may, for example, be CH₃(CH₂)₁₀-, CH₃(CH₂)₁₂-, CH₃(CH₂)₁₄-, CH₃(CH₂)₁₆-, CH₃(CH₂)₁₈-, CH₃(CH₂)₂₀-, CH₃(CH₂)₂₂-, or the like.

The unsaturated hydrocarbon group of R⁶ may be a monovalent chain-type unsaturated aliphatic hydrocarbon group, for example.

Moreover, the number of carbons included in the unsaturated hydrocarbon group of R⁶ may be 11 or more, may be 13 or more, may be 15 or more, may be 23 or less, may be 21 or less, may be 19 or less, or may be 17.

The unsaturated hydrocarbon group of R⁶ may, for example, be an unsaturated hydrocarbon group that includes a carbon-carbon double bond such as a mono-unsaturated hydrocarbon group (CH₃(CH₂)₇CH=CH(CH₂)₇-, CH₃(CH₂)₇CH=CH(CH₂)₁₁-, etc.), a di-unsaturated hydrocarbon group (CH₃(CH₂)₄(CH=CHCH₂)₂(CH₂)₆-, etc.), a tri-unsaturated hydrocarbon group (CH₃CH₂(CH=CHCH₂)₃(CH₂)₆-, etc.), a tetra-unsaturated hydrocarbon group, a penta-unsaturated hydrocarbon group, or a hexa-unsaturated hydrocarbon group; or an unsaturated hydrocarbon group that includes a carbon-carbon triple bond.

More specifically, the amide compound may, for example, be ethylene bisoleamide (particularly dimethylene bisoleamide), ethylene biserucamide, hexamethylene bisoleamide, ethylene bislauramide, ethylene bisstearamide (particularly dimethylene bisstearamide), ethylene bispalmitamide, hexamethylene bisstearamide, or the like.

The content of the amide compound in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (a) vinyl chloride resin.

Moreover, the content of the amide compound in the vinyl chloride resin composition may be 0 parts by mass, may be 0.1 parts by mass or more, may be 0.25 parts by mass or more, may be 1.5 parts by mass or less, may be 1.25 parts by mass or less, or may be 1 part by mass or less relative to 100 parts by mass of the (b) plasticizer.

It may of course alternatively be the case that the presently disclosed vinyl chloride resin composition does not contain an amide compound.

### <Proportion of tetrahydrofuran-insoluble content in vinyl chloride resin composition>

The proportion of tetrahydrofuran-insoluble content in the vinyl chloride resin composition is preferably 8.5 mass% or more, more preferably 9 mass% or more, even more preferably 9.5 mass% or more, and further preferably 9.7 mass% or more, and is preferably 20 mass% or less, more preferably 18 mass% or less, even more preferably 16 mass% or less, and further preferably 15 mass% or less.

When the proportion of tetrahydrofuran-insoluble content in the vinyl chloride resin composition is not less than any of the lower limits set forth above, powder fluidity of the vinyl chloride resin composition can be improved. Moreover, when the proportion of tetrahydrofuran-insoluble content in the vinyl chloride resin composition is not less than any of the lower limits set forth above, surface stickiness of a formed vinyl chloride resin molded product can be suppressed. On the other hand, when the proportion of tetrahydrofuran-insoluble content in the vinyl chloride resin composition is not more than any of the upper limits set forth above, sufficiently high tensile elongation of a formed vinyl chloride resin molded product can be ensured.

Note that the proportion of tetrahydrofuran-insoluble content in the vinyl chloride resin composition can be adjusted by altering the amounts of components (for example, the (a) vinyl chloride resin, (b) plasticizer, (c) hindered amine light stabilizer, (d) cross-linked vinyl chloride resin, etc.) used in production of the vinyl chloride resin composition.

The "proportion of tetrahydrofuran-insoluble content" of a vinyl chloride resin composition that is referred to in the present disclosure can be measured according to a method described in the EXAMPLES section of the present specification using the vinyl chloride resin composition or a vinyl chloride resin molded product formed using the vinyl chloride resin composition as a measurement sample.

A ratio of the proportion of tetrahydrofuran-insoluble content and the proportional content of the plasticizer (proportion of tetrahydrofuran-insoluble content/proportional content of plasticizer) in the vinyl chloride resin composition is preferably 0.17 or more, more preferably 0.175 or more, even more preferably 0.185 or more, further preferably 0.19 or more, and even further preferably 0.195 or more, and is preferably 0.50 or less, more preferably 0.45 or less, even more preferably 0.40 or less, further preferably 0.35 or less, and even further preferably 0.32 or less.

When the ratio of the proportion of tetrahydrofuran-insoluble content and the proportional content of the plasticizer (proportion of tetrahydrofuran-insoluble content/proportional content of plasticizer) in the vinyl chloride resin composition is not less than any of the lower limits set forth above, powder fluidity of the vinyl chloride resin composition can be improved. Moreover, when the ratio of the proportion of tetrahydrofuran-insoluble content and the proportional content of the plasticizer (proportion of tetrahydrofuran-insoluble content/proportional content of plasticizer) in the vinyl chloride resin composition is not less than any of the lower limits set forth above, surface stickiness of a formed vinyl chloride resin molded product can be suppressed. On the other hand, when the ratio of the proportion of tetrahydrofuran-insoluble content and the proportional content of the plasticizer (proportion of tetrahydrofuran-insoluble content/proportional content of plasticizer) in the vinyl chloride resin composition is not more than any of the upper limits set forth above, sufficiently high tensile elongation of a formed vinyl chloride resin molded product can be ensured.

### <Production method of vinyl chloride resin composition>

The presently disclosed vinyl chloride resin composition can be produced by mixing the components described above.

The mixing method of the above-described (a) vinyl chloride resin, (b) plasticizer, (c) hindered amine light stabilizer, and (d) cross-linked vinyl chloride resin and various additives that are further compounded as necessary may be a method in which components other than a dusting agent (inclusive of vinyl chloride resin fine particles and the (d) cross-linked vinyl chloride resin that is an optional component) are mixed by dry blending and then the dusting agent is subsequently added and mixed, for example, but is not specifically limited thereto. The dry blending is preferably carried out using a Henschel mixer. Although the temperature during dry blending is not specifically limited, the temperature is preferably 50°C or higher, and more preferably 70°C or higher, and is preferably 200°C or lower.

### <Use of vinyl chloride resin composition>

The obtained vinyl chloride resin composition can be suitably used in powder molding, and even more suitably used in powder slush molding.

### (Vinyl chloride resin molded product)

A feature of the presently disclosed vinyl chloride resin molded product is that it is obtained by molding the vinyl chloride resin composition set forth above by any method. As a result of the presently disclosed vinyl chloride resin molded product being formed using the vinyl chloride resin composition set forth above, the presently disclosed vinyl chloride resin molded product normally contains at least the (a) vinyl chloride resin, the (b) plasticizer, and the (c) hindered amine light stabilizer, and optionally further contains the (d) cross-linked vinyl chloride resin and various additives. Moreover, the presently disclosed vinyl chloride resin molded product has suppressed gloss change and excellent stability of external appearance as a result of being formed using the presently disclosed vinyl chloride resin composition set forth above.

Consequently, a laminate formed through lining of the presently disclosed vinyl chloride resin molded product with a foamed polyurethane molded product can suitably be used as an automobile interior material such as a surface skin of an automobile instrument panel.

### <Formation method of vinyl chloride resin molded product>

Although no specific limitations are placed on the mold temperature in powder slush molding in a situation in which the vinyl chloride resin molded product is formed by powder slush molding, the mold temperature is preferably 200°C or higher, and more preferably 220°C or higher, and is preferably 300°C or lower, and more preferably 280°C or lower.

The following method, for example, may be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

### (Laminate)

The presently disclosed laminate includes a foamed polyurethane molded product and the vinyl chloride resin molded product set forth above. The vinyl chloride resin molded product typically constitutes one surface of the laminate.

Moreover, the presently disclosed laminate may suitably be used as an automobile interior material forming an automobile interior component (particularly an automobile instrument panel).

The method by which the foamed polyurethane molded product and the vinyl chloride resin molded product are stacked is not specifically limited and may, for example, be a method such as described below. Specifically, (1) a method in which the foamed polyurethane molded product and the vinyl chloride resin molded product are separately prepared and are subsequently adhered to one another by thermal fusion bonding, thermal adhesion, or using a commonly known adhesive, or (2) a method in which raw materials of the foamed polyurethane molded product such as an isocyanate and a polyol are caused to react and polymerize on the vinyl chloride resin molded product while carrying out polyurethane foaming by a commonly known method to directly form the foamed polyurethane molded product on the vinyl chloride resin molded product may be adopted. The latter method (2) is more suitable because it involves a simple process and enables laminates of various different shapes to be obtained while easily achieving strong adhesion of the vinyl chloride resin molded product and the foamed polyurethane molded product.

### EXAMPLES

The following provides a more specific description of the present disclosure based on examples. However, the present disclosure is not limited to the following examples. In the following description, "%" and "parts" used in expressing quantities are by mass, unless otherwise specified.

Note that the "proportional content of a plasticizer" in a vinyl chloride resin composition is normally the same as the proportion constituted by the used amount of the plasticizer relative to the total amount of components used in production of the vinyl chloride resin composition, unless otherwise specified.

Moreover, the following methods were used to measure and evaluate the powder fluidity and proportion of tetrahydrofuran-insoluble content of a vinyl chloride resin composition and the tensile elongation, surface stickiness, color tone change, and gloss change of a vinyl chloride resin molded sheet.

### <Powder fluidity>

A vinyl chloride resin composition obtained in each example or comparative example was used to measure the bulk density from the weight thereof in a 100 mL vessel using a bulk specific gravity measurement apparatus described in JIS K-6720. The powder of the vinyl chloride resin composition loaded into the 100 mL vessel that was obtained during the above was returned to the bulk specific gravity measurement apparatus, and the time taken for all of the powder to flow when a damper was opened soon thereafter was measured to determine the number of seconds to fall. Note that an evaluation of "does not flow" was given in a case in which flow of the powder was not complete even after 1 minute of waiting. Moreover, the operations described above were each performed at normal temperature (23°C). Furthermore, a smaller number of seconds to fall indicates that the vinyl chloride resin composition has better powder fluidity in a normal temperature state.

### <Proportion of tetrahydrofuran-insoluble content>

Approximately 0.3 g of a vinyl chloride resin molded product (vinyl chloride resin molded sheet) as a measurement sample was cut out, was finely chopped up, and was loaded into a 100 mL glass bottle. Accurate weighing was performed so as to determine the mass of the sample. After this weighing, 90 mL of tetrahydrofuran (THF) was added to the measurement sample, and then the measurement sample was left at rest for 24 hours to cause dissolution thereof. One sheet of glass fiber filter paper (GF-75 ∅110 mm) produced by Advantec Co., Ltd. was taken out and was accurately weighed so as to determine the pre-test mass of the filter paper. This filter paper was used to perform reduced pressure filtration of the THF solution in which the measurement sample had dissolved. The filter paper was then dried in a 40°C oven for 3 hours after the filtration. The mass of the dried filter paper was accurately weighed so as to determine the post-test mass of the filter paper. The proportion of THF-insoluble content in the vinyl chloride resin composition was determined by the following formula. Proportion of THF-insoluble content = {(post-test filter paper mass - pre-test filter paper mass)/sample mass} × 100(%)

### <Tensile elongation>

### [Initial (pre-heating)]

A vinyl chloride resin molded sheet obtained in each example or comparative example was punched out with a No. 1 dumbbell described in JIS K6251, and then tensile breaking elongation (%) at a low temperature of -10°C was measured in accordance with JIS K7113 at a tensing rate of 200 mm/min. A larger value for the tensile breaking elongation indicates that the vinyl chloride resin molded sheet has better tensile elongation.

### [Post-heating (heat aging test)]

A laminate having a vinyl chloride resin molded sheet lined with a foamed polyurethane molded product that was obtained in each example or comparative example was used as a sample. The sample was placed inside an oven and was heated in an environment having a temperature of 120°C for 400 hours. Next, the foamed polyurethane molded product was peeled from the post-heating laminate to prepare just a vinyl chloride resin molded sheet. The tensile breaking elongation (%) of the vinyl chloride resin molded sheet at low temperature (-10°C) after 400 hours of heating at 120°C was then measured in the same manner as for the initial (pre-heating) state described above.

### <Surface stickiness>

The surface stickiness of a vinyl chloride resin molded product was evaluated as follows through measurement of the coefficient of kinetic friction.

Specifically, a texture tester (produced by Trinity-Lab Inc.; product name: TL201Ts) was used to measure the coefficient of kinetic friction of the surface of a vinyl chloride resin molded sheet prior to formation of a laminate by bringing a haptic contactor into contact with the vinyl chloride resin molded sheet under conditions of a load of 50 g, a speed of 10 mm/s, a test range of 50 mm, and a measurement range of 30 mm (excluding 10 mm at the start and the end of the test range) in a measurement environment having a temperature of 23°C and a relative humidity of 50%. A smaller value for the coefficient of kinetic friction indicates that surface stickiness of the vinyl chloride resin molded product is suppressed.

### <Color tone change and gloss change>

A laminate lined with a foamed polyurethane molded product was cut out with dimensions of 7 cm × 14 cm, and the cut-out laminate was taken to be a test specimen.

A Super Xenon Weather Meter (SX75 produced by Suga Test Instruments Co., Ltd.) was used to subject the test specimen to 150 MJ of irradiation under conditions of a black panel temperature of 83°C and an irradiation intensity of 150 w/m², and a value of ΔE and a change of gloss value (Δgloss) between before and after irradiation were determined.

ΔE was determined by using a color difference meter (Spectrophotometer CM-700D produced by Konica Minolta, Inc.) to perform measurement by the CIE color system (L*,a*,b*), and then calculating ΔE from the difference ΔL* of lightness (L*) and the differences Δa* and Ab* of color (a*,b*) between before and after irradiation by a formula: ΔE = {(ΔL*)² + (Δa*)² + (Δb*)²}^{1/2}. A smaller value for ΔE indicates that color tone change of the vinyl chloride resin molded product is suppressed and that the vinyl chloride resin molded product has better color tone stability.

A gloss value was determined by measuring 60° reflectance using a gloss meter (Gloss Meter GM-268A produced by Konica Minolta, Inc.), and then Δgloss, which is the difference (change) between the gloss value before irradiation and the gloss value after irradiation, was calculated. A smaller value for Δgloss indicates that gloss change of the vinyl chloride resin molded product is suppressed and that the vinyl chloride resin molded product has better stability of external appearance.

### (Example 1)

### <Production of vinyl chloride resin composition>

With the exception of plasticizers (adipic acid polyester and epoxidized soybean oil) and a dusting agent (vinyl chloride resin fine particles), components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the dusting agent (vinyl chloride resin fine particles) was added to the mixture to produce a vinyl chloride resin composition.

The obtained vinyl chloride resin composition was used to evaluate powder fluidity. The result is shown in Table 1.

### <Formation of vinyl chloride resin molded product>

The obtained vinyl chloride resin composition was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet of 145 mm × 175 mm × 1 mm was removed from the mold as a vinyl chloride resin molded product.

The obtained vinyl chloride resin molded product was used to evaluate the proportion of tetrahydrofuran-insoluble content, tensile elongation (initial), surface stickiness, color tone change, and gloss change. The results are shown in Table 1.

### <Formation of laminate>

The obtained vinyl chloride resin molded sheet was cut out as 100 mm × 100 mm. Two cut-out vinyl chloride resin molded sheets were arranged inside of a 200 mm × 300 mm × 10 mm mold such as to not overlap with each other and with the textured surface facing downward.

Separately thereto, a polyol mixture containing 50 parts by mass of a propylene oxide/ethylene oxide (PO/EO) block adduct of propylene glycol (hydroxyl value: 28; terminal EO unit content: 10%; internal EO unit content: 4%), 50 parts by mass of a PO/EO block adduct of glycerin (hydroxyl value: 21; terminal EO unit content: 14%), 2.5 parts by mass of water, 0.2 parts by mass of an ethylene glycol solution of triethylenediamine (produced by Tosoh Corporation; product name: TEDA-L33), 1.2 parts by mass of triethanolamine, 0.5 parts by mass of triethylamine, and 0.5 parts by mass of a foam stabilizer (produced by Shin-Etsu Chemical Co., Ltd.; product name: F-122) was mixed with polymethylene polyphenylene polyisocyanate (polymeric MDI) in a ratio determined to give an index of 98 so as to prepare a mixed liquid. The prepared mixed liquid was poured onto the two vinyl chloride resin molded sheets that had been placed in the mold as described above. Thereafter, the mold was covered by a 348 mm × 255 mm × 10 mm aluminum plate to seal the mold. Once 5 minutes had passed after sealing, a laminate in which a vinyl chloride resin molded sheet of 1 mm in thickness was lined with a foamed polyurethane molded product was removed from the mold, and tensile elongation (post-heating) was evaluated for the vinyl chloride resin molded sheet in the laminate. The result is shown in Table 1.

### (Examples 2 to 5 and Comparative Examples 1 to 6)

A vinyl chloride resin composition, a vinyl chloride resin molded product, and a laminate were produced and various evaluations were performed in the same way as in Example 1 with the exception that the formulation was changed as indicated in Tables 1 to 3. The results are shown in Tables 1 to 3. Note that in production of the vinyl chloride resin composition, cross-linked vinyl chloride resin fine particles serving as a dusting agent were added at the same time as the vinyl chloride resin fine particles also serving as a dusting agent.

**[Table 1]**

| | | | | | Comparative Example 1 | Comparative Example 2 | Comparative Example 3 | Example 1 |
|---|---|---|---|---|---|---|---|---|
| | Vinyl chloride resin | Vinyl chloride resin particles⁽¹⁾ [parts by mass] | | | 100 | 100 | 100 | 100 |
| | | Vinyl chloride resin fine particks (dusting agent)⁽²⁾ [parts by mass] | | | 16 | 16 | 16 | 16 |
| | Plasticizer | Trimellitic acid ester⁽³⁾ [parts by mass] | | | - | - | - | - |
| | | Adipic acid polyester⁽⁴⁾ [parts by mass] | | | 120 | 120 | 120 | 120 |
| | | Other plasticizer (epoxidized soybean oil⁽⁵⁾ [parts by mass] | | | 5 | 5 | 5 | 5 |
| | Stabilizer | Perchloric acid-substituted hydrotalcite⁽⁶⁾ [parts by mass] | | | 2.5 | 2.5 | 2.5 | 2.5 |
| | | Zeolite⁽⁷⁾ [parts by mass] | | | 1.2 | 1.2 | 1.2 | 1.2 |
| | | Stearoyl benzoyl methane (β-diketone)⁽⁸⁾ [parts by mass] | | | 0.5 | 0.5 | 0.5 | 0.5 |
| Formulation | | Zinc stearate⁽⁹⁾ [parts by mass] | | | 0.2 | 0.2 | 0.2 | 0.2 |
| | Mold release agent | 12-Hydroxystearic acid⁽¹⁰⁾ [parts by mass] | | | 0.6 | 0.6 | 0.6 | 0.6 |
| | Amide compound | Ethylene bisoleamide⁽¹¹⁾ [parts by mass] | | | 0.5 | 0.5 | 0.5 | 0.5 |
| | Hindered amine light stabilizer | Tinuvin 765 (molecular weight: 509)⁽¹²⁾ [parts by mass] | | | - | 0.3 | - | - |
| | | ADK STAB LA-63P (molecular weight: approx. 2,000)⁽¹³⁾ [parts by mass] | | | - | - | 0.3 | - |
| | | Tinuvin 144 (molecular weight: 685)⁽¹⁴⁾ [parts by mass] | | | - | - | - | 0.3 |
| | Cross-linked vinyl chloride resin | Cross-linked vinyl chloride resin fine particles (dusting agent)⁽¹⁵⁾ [parts by mass] | | | - | - | - | - |
| | Pigment | Black⁽¹⁶⁾ [parts by mass] | | | 1.1 | 1.1 | 1.1 | 1.1 |
| | Total (total amount of vinyl chloride resin composition) [parts by mass] | | | | 247.6 | 247.9 | 247.9 | 247.9 |
| Content relative to 100 parts by mass of vinyl chloride resin | | Total plasticizer [parts by mass] | | | 107.8 | 107.8 | 107.8 | 107.8 |
| | | Trimellitic acid ester [parts by mass] | | | - | - | - | - |
| | | Adipic acid polyester [parts by mass] | | | 103.4 | 103.4 | 103.4 | 103.4 |
| | | Other plasticizer [parts by mass] | | | 4.3 | 4.3 | 4.3 | 4.3 |
| | | Hindered amine light stabilizer [parts by mass] | | | - | 0.259 | 0.259 | 0.259 |
| | | Cross-linked vinyl chloride resin [parts by mass] | | | - | - | - | - |
| | | Amide compound [parts by mass] | | | 0.431 | 0.431 | 0.431 | 0.431 |
| Content relative to 100 parts by mass of plasticizer | | Cross-linked vinyl chloride resin [parts by mass] | | | - | - | - | - |
| | | Hindered amine light stabilizer [parts by mass] | | | - | 0.240 | 0.240 | 0.240 |
| | | Amide compound [parts by mass] | | | 0.400 | 0.400 | 0.400 | 0.400 |
| Molecular weight of(c) hindered amine light stabilizer | | | | | - | 509 | Approx. 2000 | 685 |
| Proportion oftetrahydrofuran-insoluble content | | | | | 8.6% | 8.8% | 9.2% | 8.9% |
| Proportional content of plasticizer | | | | | 50.5% | 50.4% | 50.4% | 50.4% |
| Proportion of tetrahydrofuran-insolible content/Proportional content of plasticizer | | | | | 0.169 | 0.175 | 0.183 | 0.176 |
| Evaluation | Powder fluidity | | No. of seconds to fall [s] | | 14.7 | 13.4 | 14.5 | 14.6 |
| | | | Bulk density [g/cm³] | | 0.57 | 0.57 | 0.57 | 0.57 |
| | Tensile breaking elongation [%] | | -10°C | Initial | 276 | 276 | 268 | 283 |
| | | | | Post-heating | 228 | 214 | 217 | 233 |
| | Surface stickiness | | Coefficient of kinetic friction | | 0.68 | 0.72 | 0.67 | 0.66 |
| | Color tone change | | | ΔE | 1.0 | 0.6 | 0.6 | 0.6 |
| | Gloss change | | | ΔGloss | 3.4 | 1.6 | 1.6 | 1.4 |

**[Table 2]**

| | | | | | Comparative Example 4 | Comparative Example 5 | Example 2 | Example 3 | Example 4 |
|---|---|---|---|---|---|---|---|---|---|
| | Vinyl chloride resin | Vinyl chloride resin particles⁽¹⁾ [parts by mass] | | | 100 | 100 | 100 | 100 | 100 |
| | | Vinyl chloride resin fine particles (dusting agent)⁽²⁾ [parts by mass] | | | 8 | 8 | 8 | 8 | 8 |
| | Plasticizer | Trimellitic acid ester⁽³⁾ [parts by mass] | | | - | - | - | - | - |
| | | Adipic acid polyester⁽⁴⁾ [parts by mass] | | | 120 | 120 | 120 | 120 | 100 |
| | | Other plasticizer (epoxidized soybean oil⁽⁵⁾) [parts by mass] | | | 5 | 5 | 5 | 5 | 5 |
| | Stabilizer | Perchloric acid-substituted hydrotabte⁽⁶⁾ [parts by mass] | | | 2.5 | 2.5 | 2.5 | 2.5 | 2.5 |
| | | Zeolite⁽⁷⁾ [parts by mass] | | | 1.2 | 1.2 | 1.2 | 1.2 | 1.2 |
| | | Stearoyl benzoyl methane (β-diketone)⁽⁸⁾ [parts by mass] | | | 0.5 | 0.5 | 0.5 | 0.5 | 0.5 |
| | | Zinc stearate⁽⁹⁾ [parts by mass] | | | 0.2 | 0.2 | 0.2 | 0.2 | 0.2 |
| Formulation | Mold release agent | 12-Hydroxystearic acid⁽¹⁰⁾ [parts by mass] | | | 0.6 | 0.6 | 0.6 | 0.6 | 0.6 |
| | Amide compound | Ethylene bisoleamide⁽¹¹⁾ [parts by mass] | | | 0.5 | 0.5 | 0.5 | 0.5 | 0.5 |
| | Hindered amine light stabilizer | Tinuvin 765 (molecular weight: 509)⁽¹²⁾ [parts by mass] | | | - | - | - | - | - |
| | | ADK STAB LA-63P (molecular weight: approx. 2,000)⁽¹³⁾ [parts by mass] | | | - | 0.3 | - | - | - |
| | | Tinuvin 144 (molecular weight: 685)⁽¹⁴⁾ [parts by mass] | | | - | - | 0.3 | 0.6 | 0.3 |
| | Cross-linked vinyl chloride resin | Cross-linked vinyl chloride resin fine particles (dusting agent)⁽¹⁵⁾ [parts by mass] | | | 8 | 8 | 8 | 8 | 8 |
| | Pigment | Black⁽¹⁶⁾ [parts by mass] | | | 1.1 | 1.1 | 1.1 | 1.1 | 1.1 |
| | Total (total amount of vinyl chloride resin composition) [parts by mass] | | | | 239.6 | 239.9 | 239.9 | 240.2 | 219.9 |
| Content relative to 100 parts by mass of vinyl chloride resin | | Total plasticizer [parts by mass] | | | 115.7 | 115.7 | 115.7 | 115.7 | 97.2 |
| | | Trimelltic acid ester [parts by mass] | | | - | - | - | - | - |
| | | Adipic acid polyester [parts by mass] | | | 111.1 | 111.1 | 111.1 | 111.1 | 92.6 |
| | | Other plasticizer [parts by mass] | | | 4.6 | 4.6 | 4.6 | 4.6 | 4.6 |
| | | Hindered amine light stabilizer [parts by mass] | | | - | 0.278 | 0.278 | 0.556 | 0.278 |
| | | Cross-linked vinyl chloride resin [parts by mass] | | | 7.4 | 7.4 | 7.4 | 7.4 | 7.4 |
| | | Amide compound [parts by mass] | | | 0.463 | 0.463 | 0.463 | 0.463 | 0.463 |
| Content relative to 100 parts by mass of plasticizer | | Cross-linked vinyl chloride resin [parts by mass] | | | 6.4 | 6.4 | 6.4 | 6.4 | 7.6 |
| | | Hindered amine light stabilizer [parts by mass] | | | - | 0.240 | 0.240 | 0.480 | 0.286 |
| | | Amide compound [parts by mass] | | | 0.400 | 0.400 | 0.400 | 0.400 | 0.476 |
| Molecular weight of(c) hindered amine light stabilizer | | | | | - | Approx. 2000 | 685 | 685 | 685 |
| Proportion oftetrahydrofuran-insoluble content | | | | | 10.2% | 10.0% | 10.8% | 9.9% | 9.6% |
| Proportional content of plasticizer | | | | | 52.2% | 52.1% | 52.1% | 520% | 47.7% |
| Proportion of tetrahydrofuran-irisolable content/Proportional content of plasticizer | | | | | 0.196 | 0.192 | 0.207 | 0.191 | 0.202 |
| Evaluation | Powder fluidity | | No. of seconds to fall [s] | | 14.0 | 13.7 | 13.5 | 13.6 | 14.7 |
| | | | Bulk density [g/cm³] | | 0.58 | 0.58 | 0.58 | 0.58 | 0.60 |
| | Tensile breaking elongation [%] | | -10°C | Initial | 244 | 251 | 250 | 219 | 184 |
| | | | | Post-heating | 213 | 222 | 220 | 219 | 169 |
| | Surface stickiness | | Coefficient of kinetic friction | | 0.47 | 0.44 | 0.45 | 0.45 | 0.36 |
| | Color tone change | | | ΔE | 1.0 | 1.0 | 1.2 | 1.2 | 1.4 |
| | Gloss change | | | ΔGloss | 3.7 | 1.6 | 1.1 | 1.2 | 0.8 |

**[Table 3]**

| | | | | | Comparative Example 6 | Example 5 |
|---|---|---|---|---|---|---|
| | Vinyl chloride resin | Vinyl chloride resin particles⁽¹⁾ [parts by mass] | | | 100 | 100 |
| | | Vinyl chloride resin fine particles (dusting agent)⁽²⁾ [parts by mass] | | | 16 | 8 |
| | Plasticizer | Trimellitic acid ester⁽³⁾ [parts by mass] | | | 120 | 120 |
| | | Adipic acid polyester⁽⁴⁾ [parts by mass] | | | - | - |
| | | Other plasticizer (epoxidized soybean oil⁽⁵⁾) [parts by mass] | | | 5 | 5 |
| | Stabilizer | Perchloric acid-substituted hydrotalcite⁽⁶⁾ [parts by mass] | | | 2.5 | 2.5 |
| | | Zeolite⁽⁷⁾ [parts by mass] | | | 1.2 | 1.2 |
| | | Stearoyl benzoyl methane (β-diketone)⁽⁸⁾ [parts by mass] | | | 0.5 | 0.5 |
| | | Zinc stearate⁽⁹⁾ [parts by mass] | | | 0.2 | 0.2 |
| Formulation | Mold release agent | 12-Hydroxystearic acid⁽¹⁰⁾ [parts by mass] | | | 0.6 | 0.6 |
| | Amide compound | Ethylene bisoleamide⁽¹¹⁾ [parts by mass] | | | 0.5 | 0.5 |
| | Hindered amine light stabilizer | Tinuvin 765 (molecular weight: 509)⁽¹²⁾ [parts by mass] | | | - | - |
| | | ADK STAB LA-63P (molecular weight: approx. 2,000)⁽¹³⁾ [parts by mass] | | | - | - |
| | | Tinuvin 144 (molecular weight: 685)⁽⁴⁾ [parts by mass] | | | - | 0.3 |
| | Cross-linked vinyl chloride resin | Cross-linked vinyl chloride resin fine particles (dusting agent)⁽¹⁵⁾ [parts by mass] | | | - | 8 |
| | Pigment | Black⁽¹⁶⁾ [parts by mass] | | | 1.1 | 1.1 |
| | Total (total amount of vinyl chloride resin composition) [parts by mass] | | | | 247.6 | 239.9 |
| Content relative to 100 parts by mass of vinyl chloride resin | | Total plasticizer [parts by mass] | | | 107.8 | 115.7 |
| | | Trimellitic acid ester [parts by mass] | | | 103.4 | 111.1 |
| | | Adipic acid polyester [parts by mass] | | | - | - |
| | | Other plasticizer [parts by mass] | | | 4.3 | 4.6 |
| | | Hindered amine light stabilizer [parts by mass] | | | - | 0.278 |
| | | Cross-linked vinyl chloride resin [parts by mass] | | | - | 7.4 |
| | | Amide compound [parts by mass] | | | 0.431 | 0.463 |
| Content relative to 100 parts by mass of plasticizer | | Cross-linked vinyl chloride resin [parts by mass] | | | - | 6.4 |
| | | Hindered amine light stabilizer [parts by mass] | | | - | 0.240 |
| | | Amide compound [parts by mass] | | | 0.400 | 0.400 |
| Molecular weight of(c) hindered amine light stabilizer | | | | | - | 685 |
| Proportion of tetrahydrofuran- insoluble content | | | | | 8.1% | 10.4% |
| Proportional content of plasticizer | | | | | 50.5% | 52.1% |
| Proportion of tetrahydrofuran-insoluble content/Proportional content of plasticizer | | | | | 0.161 | 0.199 |
| Evaluation | Powder fluidity | | No. of seconds to fall [s] | | 14.8 | 14.9 |
| | | | Bulk density [g/cm³] | | 0.59 | 0.59 |
| | Tensile breaking elongation [%] | | -10°C | Initial | 279 | 207 |
| | | | | Post-heating | 236 | 186 |
| | Surface stickiness | | Coefficient of kinetic friction | | 0.41 | 0.33 |
| | Color tone change | | | ΔE | 1.1 | 1.6 |
| | Gloss change | | | ΔGloss | 2.2 | 0.7 |

| | | | | | | |
|---|---|---|---|---|---|---|
| **[0112]** (1) Product name: ZEST^{®} (ZEST is a registered trademark in Japan, other countries, or both) 1700ZI (produced by suspension polymerization; average degree of polymerization: 1,700; average particle diameter: 129 µm); produced by Shin Dai-ichi Vinyl Corporation (2) Product name: ZEST PQLTX (produced by emulsion polymerization; average degree of polymerization: 800; average particle diameter: 1.8 µm); produced by Shin Dai-ichi Vinyl Corporation (3) Product name: TRIMEX N-08 (tri-n-alkyl trimellitate (mixture of n-octyl groups and n-decyl groups as n-alkyl groups)); produced by Kao Corporation (4) Product name: ADK CIZER HPN-3130 (adipic acid polyester; viscosity: 4,000 mPa·s); produced by Adeka Corporation (5) Product name: ADK CIZER O-130S; produced by Adeka Corporation (6) Product name: ALCAMIZER^{®} 5 (ALCAMIZER is a registered trademark in Japan, other countries, or both); produced by Kyowa Chemical Industry Co., Ltd. (7) Product name: MIZUKALIZER DS; produced by Mizusawa Industrial Chemicals, Ltd. (8) Product name: Karenz DK-1; produced by Showa Denko K.K. (9) Product name: SAKAI SZ2000; produced by Sakai Chemical Industry Co., Ltd. (10) Product name: ADK STAB LS-12; produced by Adeka Corporation (11) Product name: SLIPACKS^{®} O (SLIPACKS is a registered trademark in Japan, other countries, or both); produced by Nippon Kasei Chemical Co., Ltd. (12) Product name: Tinuvin 765 (hindered amine light stabilizer represented by following formula (IV); compound name: bis(1,2,2,6,6-pentamethyl-4-piperidyl) sebacate; molecular weight: 509); produced by BASF Japan Ltd. 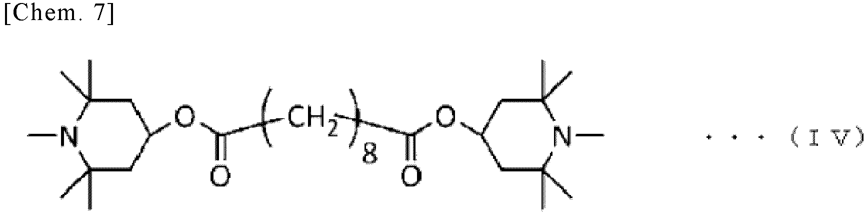 (13) Product name: ADK STAB LA-63P (hindered amine light stabilizer represented by following formula (V); molecular weight: approximately 2,000); produced by Adeka Corporation 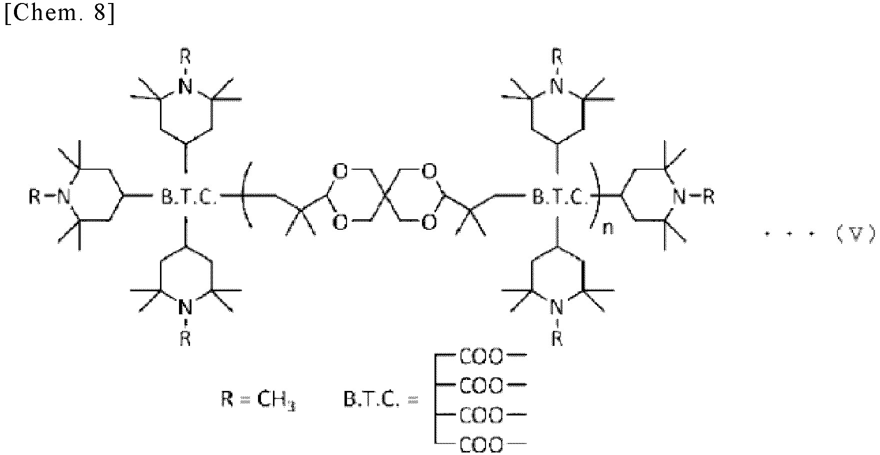 (14) Product name: Tinuvin 144 (hindered amine light stabilizer represented by following formula (III); compound name: bis(1,2,2,6,6-pentamethyl-4-piperidyl) butyl(3,5-di-tert-butyl-4-hydroxybenzyl)malonate; molecular weight: 685); produced by BASF Japan Ltd. 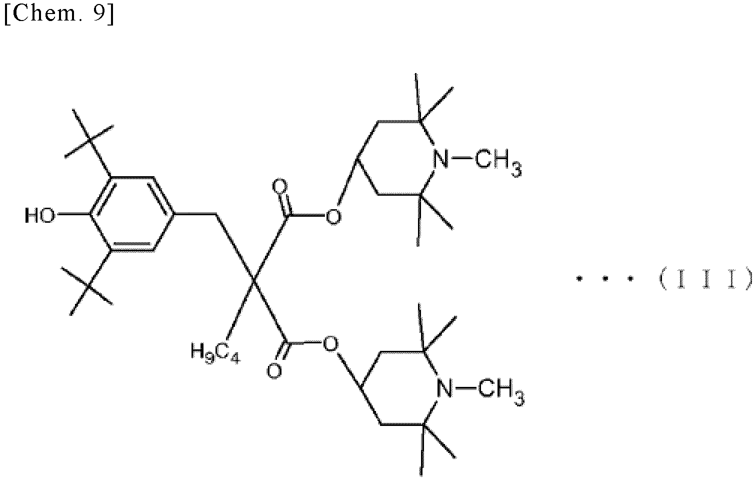 (15) Product name: Ryuron paste AD50 (produced by emulsion polymerization; average particle diameter: 1.7 µm); produced by Tosoh Corporation (16) Product name: DA P 4720 Black; produced by Dainichiseika Color and Chemicals Mfg. Co., Ltd. | | | | | | |

It can be seen from Tables 1 to 3 that when using the vinyl chloride resin compositions of Examples 1 to 5, which each contain a vinyl chloride resin, not less than a specific amount of a plasticizer, and a hindered amine light stabilizer having a molecular weight within a specific range, it is possible to suppress gloss change of a formed vinyl chloride resin molded product as compared to when using the vinyl chloride resin compositions of Comparative Examples 1 to 6, which each do not contain a hindered amine light stabilizer having a molecular weight within a specific range.

### INDUSTRIAL APPLICABILITY

According to the present disclosure, it is possible to provide a vinyl chloride resin composition that is capable of forming a vinyl chloride resin molded product having suppressed gloss change.

Moreover, according to the present disclosure, it is possible to provide a vinyl chloride resin molded product having suppressed gloss change.

Furthermore, according to the present disclosure, it is possible to provide a laminate including this vinyl chloride resin molded product.

## Claims

1. A vinyl chloride resin composition comprising:
a vinyl chloride resin;
a plasticizer; and
a hindered amine light stabilizer having a molecular weight of not less than 550 and not more than 1,500, wherein
content of the plasticizer is 75 parts by mass or more relative to 100 parts by mass of the vinyl chloride resin.

2. The vinyl chloride resin composition according to claim 1, wherein content of the hindered amine light stabilizer is not less than 0.01 parts by mass and not more than 20 parts by mass relative to 100 parts by mass of the vinyl chloride resin.

3. The vinyl chloride resin composition according to claim 1, wherein the hindered amine light stabilizer includes a monovalent organic group represented by formula (I), shown below: 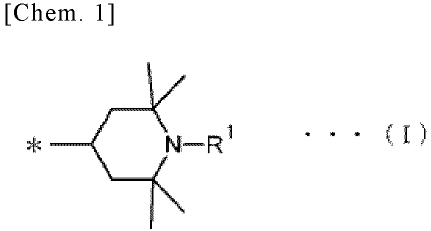 where, in formula (I), R¹ is a hydrogen atom or an alkyl group, and an asterisk (*) indicates atomic bonding.

4. The vinyl chloride resin composition according to claim 3, wherein R¹ is a methyl group.

5. The vinyl chloride resin composition according to claim 1, wherein the hindered amine light stabilizer includes a monovalent organic group represented by formula (II), shown below: 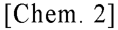 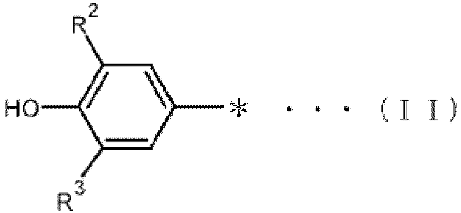 where, in formula (II), R² and R³ are each, independently of each other, a hydrogen atom or an alkyl group, and an asterisk (*) indicates atomic bonding.

6. The vinyl chloride resin composition according to claim 5, wherein R² and R³ are each a tert-butyl group.

7. The vinyl chloride resin composition according to claim 1, wherein the hindered amine light stabilizer includes a compound represented by formula (III), shown below:

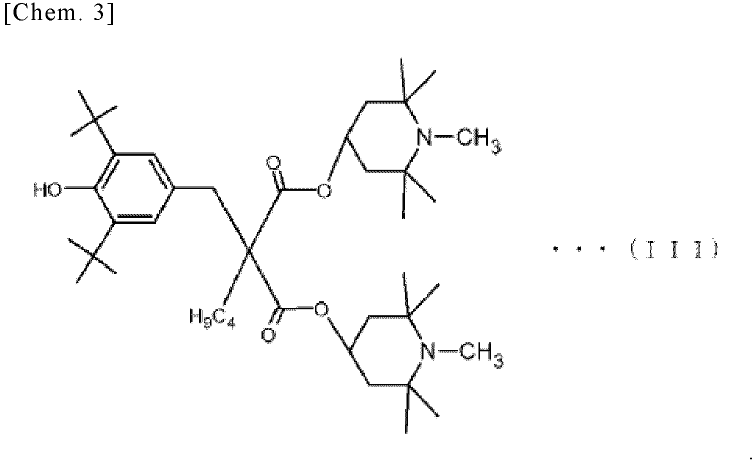

8. The vinyl chloride resin composition according to claim 1, wherein the plasticizer includes either or both of a trimellitic acid ester and a polyester.

9. The vinyl chloride resin composition according to claim 1, further comprising a cross-linked vinyl chloride resin.

10. The vinyl chloride resin composition according to claim 1 used in powder molding.

11. The vinyl chloride resin composition according to claim 1 used in powder slush molding.

12. A vinyl chloride resin molded product obtained through molding of the vinyl chloride resin composition according to any one of claims 1 to 11.

13. The vinyl chloride resin molded product according to claim 12 for a surface skin of an automobile instrument panel.

14. A laminate comprising:
a foamed polyurethane molded product; and
the vinyl chloride resin molded product according to claim 12.

15. The laminate according to claim 14 for an automobile instrument panel.
